# EUROPÄISCHE PATENTSCHRIFT

(11) **EP 4 330 094 B1**
(45) Veröffentlichungstag und Bekanntmachung des Hinweises auf die Patenterteilung: **12.02.2025**
(21) Anmeldenummer: 22716332.6
(22) Anmeldetag: 31.03.2022
(51) Int. Cl.: B60T 13/74

(54) **VERFAHREN ZUR DRUCKSPITZENREDUKTION IN HYDRAULISCHEN BREMSANLAGEN UND BREMSANLAGE DAFÜR**
METHOD FOR REDUCING PRESSURE PEAKS IN HYDRAULIC BRAKING SYSTEMS AND BRAKING SYSTEM THEREFOR
PROCÉDÉ DE RÉDUCTION DE PICS DE PRESSION DANS DES SYSTÈMES DE FREINAGE HYDRAULIQUES ET SYSTÈME DE FREINAGE ASSOCIÉ

(30) Priorität: 26.04.2021 DE 102021204111
(43) Veröffentlichungstag der Anmeldung: 06.03.2024
(73) Patentinhaber: Continental Automotive Technologies GmbH, 30175 Hannover (DE)
(72) Erfinder: STANOJKOVSKI, Aleksandar, 60488 Frankfurt am Main (DE)
(74) Vertreter: Continental Corporation
(86) Internationale Anmeldenummer: PCT/DE2022/200058
(87) Internationale Veröffentlichungsnummer: WO 2022/228622

(56) Entgegenhaltungen:
- DE-A1- 102016 203 735
- DE-A1- 102018 220 901
- US-A1- 2020 039 492

## Beschreibung

Die Erfindung betrifft ein Verfahren zur Reduzierung von Druckspitzen in hydraulischen Bremsanlagen aufweisend eine elektrisch betriebene Druckbeaufschlagungseinrichtung.

In modernen Bremsanlagen wird bei fahrerunabhängigen Bremseingriffen eine Druckstellung in der Hydraulik der Bremsanlage durch die elektrisch betriebene Druckbeaufschlagungseinrichtung bewirkt. Bei sogenannten brake-by-wire Bremsanlagen wird auch bei durch den Fahrer ausgelösten Bremseingriffen eine Druckstellung durch die elektrisch betriebene Druckbeaufschlagungseinrichtung bewirkt. In manchen Betriebszuständen, arbeitet die Druckbeaufschlagungseinrichtung zumindest kurzzeitig gegen geschlossene Ventile und somit gegen ein System mit sehr hoher Steifigkeit. Dies ist beispielsweise der Fall, wenn bei einer aktiver Volumenförderung der Druckbeaufschlagungseinrichtung die Einlassventile der Radbremsen schlagartig schließen. Dadurch können durch die Masseträgheit der Druckbeaufschlagungseinrichtung innerhalb weniger Millisekunden Druckspitzen in der Höhe von mehreren hundert Bar entstehen, welche eine negative Auswirkung auf die Lebensdauer der hydraulischen Bauteile hat.

Aus der DE 10 2016 203 735 A1 ist ein Verfahren zum Betreiben einer Bremsanlage bekannt bei dem der zeitliche Verlauf des Systemdrucks überwacht wird, um Druckschwingungen zu detektieren. In diesem Fall wird der bereitgestellte Volumenstrom reduziert. Ein Sollmotormoment für die Druckbereitstellungseinrichtung wird in einem Begrenzungsmodul begrenzt.

Aus der DE 10 2018 220 901 A1 ist eine Bremsanlage bekannt, die nach dem brake-by-wire Prinzip arbeitet, wobei in einem Linearaktuator ein Sensor angeordnet ist, der einen schnellen Pedalantritt erkennen kann.

Weiter ist aus der US 2020/0039492A1 bekannt, von einem Druckerzeuger nur einen maximalen Solldruckgradienten anzufordern, welcher in Abhängigkeit der aktuellen Elastizität der Bremsanlage gewählt wird, der sich aus den Schaltzuständen der Ventile ergibt.

Um derartige Druckspitzen zu vermeiden, ist es bekannt, Daten eines Systemdrucksensors auszuwerten und bei Auftreten von zu hohen Drücken in die Raddruckregelung einzugreifen. Da Bremsanlagen typischerweise eine hohe Redundanz aufweisen müssen, um ein sicheres Abbremsen des Fahrzeugs auch bei Ausfall von Teilsystem gewährleisten zu können, nutzen diese oftmals eine Vielzahl von Steuereinheiten, welche über eine Schnittstelle miteinander kommunizieren. Da eine solche Kommunikation jedoch mit einem großen Zeitversatz einhergeht, kommen die Regelungen teilweise zu spät, um das Auftreten der Druckspitzen sicher zu verhindern.

Es ist daher Aufgabe der vorliegenden Erfindung, ein Verfahren anzugeben, mit dem auch in hoch redundanten Bremsanlagen das Auftreten von Druckspitzen verhindert werden kann.

Die Aufgabe wird gelöst durch ein Verfahren zur Reduzierung von Druckspitzen in hydraulischen Bremsanlagen aufweisend eine elektrisch betriebene Druckbeaufschlagungseinrichtung, gemäß Anspruch 1. Eine Antriebswiderstandsgröße, insbesondere das Drehmoment, der Druckbeaufschlagungseinrichtung wird gemessen und eine Geschwindigkeitsgröße der Druckbeaufschlagungseinrichtung wird gemessen. Aus diesen beiden Messwerten, der Antriebswiderstandsgröße und der Geschwindigkeitsgröße, wird ein Quotient berechnet. Es hat sich gezeigt, dass sich die beiden Messwerte bei Auftreten eines Sprungs gegenläufig veralten, wobei der Effekt durch die erfindungsgemäße Quotientenbildung überhöht wird. Wird der so bestimmte Quotient nun auf das Auftreten eines Sprungs überwacht, so zeigt sich dieser besonders früh und besonders deutlich. Im Falle eines festgestellten Sprungs wird dann eine Geschwindigkeitsanforderung der Druckbeaufschlagungseinrichtung reduziert und/oder ein hydraulisches Ventil zum Druckabbau angesteuert. Dadurch wird die Druckspitze bereits zu Beginn effizient unterdrückt.

In einer bevorzugten Ausführungsform der Erfindung ist die Druckbeaufschlagungseinrichtung als Linearaktuator ausgebildet. Dabei handelt es sich um eine hydraulisch mit den Radbremsen verbindbare Druckbereitstellungeinrichtung mit einem in eine Druckkammer mit Hilfe eines Motors verfahrbaren Druckkolben zur Bereitstellung eines Systemdruckes zum aktiven Druckaufbau in den Radbremsen. Der Motor ist dabei typischerweise über ein Rotationstranslationsgetriebe mit dem Kolben verbunden. Als Geschwindigkeitsgröße kann die Umdrehungsgeschwindigkeit des Motors gemessen werden. Dazu kann beispielsweise ein Rotorlagensensor der Druckbeaufschlagungseinrichtung genutzt werden. Das ausgeübte Drehmoment kann beispielsweise aus der Leistungsaufnahme des Motors bestimmt werden oder auch durch einen dafür vorgesehenen Sensor gemessen werden.

In einer weiteren bevorzugten Ausführungsform der Erfindung wird ein Sprung erkannt, wenn der Absolutwert des berechneten Quotienten einen ersten Schwellwert übersteigt. Eine solche Auswertung kann besonders einfach implementiert werden und ist insbesondere bei ungenaueren Messungen oder bei stark verrauschten Messungen vorteilhaft.

In einer besonders bevorzugten Ausführungsform der Erfindung liegt der erste Schwellwert zwischen 1 mNm/rpm und 2 mNm/rpm, bevorzugt bei 1,5 mNm/rpm. Die Geschwindigkeitsgröße wurde hierbei als Umdrehungsgeschwindigkeit gewählt und in Umdrehungen pro Minute rpm (revolutions per minute) gemessen. Das Drehmoment wird in Millinewtonmeter mNm angegeben.

In einer weiteren bevorzugten Ausführungsform der Erfindung wird ein zeitlicher Verlauf des Quotienten gespeichert, wobei ein Sprung erkannt wird, wenn die Steigung des berechneten Quotienten in dem gespeicherten Verlauf einen zweiten Schwellwert übersteigt. Die Überwachung der Steigung kann alternativ oder zusätzlich zur Überwachung des Absolutwerts eingesetzt werden. Um die Genauigkeit des Verfahrens zu verbessern kann der berechnete Quotient geglätte werden. Hierzu kann beispielsweise eine zeitliche Mittelung durchgeführt werden.

In einer besonders bevorzugten Ausführungsform der Erfindung liegt der zweite Schwellwert zwischen 0,1 Nm/rpm*sek und 0,3 Nm/rpm*sek, insbesondere bei 0,15 Nm/rpm*sek.

In einer weiteren bevorzugten Ausführungsform der Erfindung wird ein zeitlicher Verlauf des Quotienten gespeichert, wobei ein Sprung erkannt wird, wenn die Krümmung des berechneten Quotienten in dem gespeicherten Verlauf einen dritten Schwellwert übersteigt. Es wird demnach die zweite Ableitung nach der Zeit des Quotienten gebildet und überwacht. Eine solche Überwachung kann insbesondere bei genauen, gut geglätteten Messwerten einen Sprung und damit eine zu erwartende Druckspitze besonders früh und sicher erkennen.

In einer weiteren bevorzugten Ausführungsform der Erfindung wird das hydraulische Ventil derart angesteuert wird, dass dieses zumindest teilweise öffnet. Somit kann hydraulisches Volumen beziehungsweise Bremsflüssigkeit durch das hydraulische Ventil abfließen, wodurch die Druckspitze minimiert wird.

In einer weiteren bevorzugten Ausführungsform der Erfindung wird die Ansteuerung des hydraulischen Ventils von der gleichen Steuereinheit durchgeführt, welche auch die Druckbeaufschlagungseinrichtung regelt. Insbesondere ist ein Systemdrucksensor der Bremsanlage auf einer anderen Steuereinheit angeordnet und nicht auf der gleichen Steuereinheit wie die Steuerung des hydraulischen Ventils und der Druckbeaufschlagungseinrichtung. Damit werden Latenzzeiten durch eine Kommunikation zwischen verschiedenen Steuereinheiten vermieden und die Überwachung kann besonders schnell reagieren.

In einer weiteren bevorzugten Ausführungsform der Erfindung ist das hydraulische Ventil zwischen der Druckbeaufschlagungseinrichtung und einem druckfreien Bremsflüssigkeitsreservoir oder Druckmittelvorratsbehälter angeordnet. Insbesondere ist das hydraulische Ventil direkt zwischen diesen Bauteilen angeordnet. Damit ist ein besonders schneller Druckabbau möglich, sobald eine aufkommende Druckspitze detektiert wurde.

In einer weiteren bevorzugten Ausführungsform der Erfindung umfasst das hydraulische Ventil zumindest ein Eingangsventil einer Radbremse der Bremsanlage. Das Eingangsventil wird dabei nicht einfach geöffnet sondern der Steuerstrom des Eingangsventils wird reduziert. Eingangsventile sind aus Redundanzgründen stromlos offene Ventile. Das heißt, die Eingangsventile werden zum Schließen und zum Halten in der geschlossenen Stellung mit einem elektrischen Strom versorgt. Die Druckdifferenz von einem hohen Druck an der der Druckbeaufschlagungseinrichtung zugewandten Seite zu dem niedrigen Druck an der der Radbremse zugewandeten Seite versucht, das Ventil aufzudrücken. Der Schließstrom wirkt dieser Kraft entgegen und hält das Ventil in der geschlossenen Stellung. Je nach eingestelltem elektrischen Schließstrom gibt es jedoch einen hydraulsichen Druck, ab dem das Einlassventil nicht mehr dicht hält und hydraulsiches Volumen passieren kann. Der Schließstrom des Einlassventils wird nun reduziert. Insbesondere auf einen Wert, der das hydraulische Ventil in einem normalen Betrieb noch geschlossen hält, jedoch bei Druckwerten, die einer Druckspitze entsprechen, (100 bis 300 bar) hydraulisches Volumen passieren lässt.

Die Aufgabe wird außerdem gelöst durch eine Bremsanlage für ein Kraftfahrzeug, die dazu eingerichtet ist eines der vorstehenden Verfahren durchzuführen.

Weitere Merkmale, Vorteile und Anwendungsmöglichkeiten der Erfindung ergeben sich auch durch die nachfolgende Beschreibung von Ausführungsbeispielen und der Zeichnungen. Dabei gehören alle beschriebenen und/oder bildlich dargestellten Merkmale sowohl einzeln als auch in beliebiger Kombination zum Gegenstand der Erfindung, auch unabhängig von ihrer Zusammenfassung in den Ansprüchen oder deren Rückbezügen.
Fig. 1 zeigt schematisch eine erfindungsgemäße Bremsanlage erster Ausführungsform,
Fig. 2 zeigt schematisch die elektronische Architektur der Bremsanlage von Fig. 1,
Fig. 3 zeigt schematisch eine erfindungsgemäße Bremsanlage zweiter Ausführungsform,
Fig. 4 zeigt eine Beispielmessung des erfindungsgemäßen Quotienten,
Fig. 5 zeigt die gemittelte Ableitung der Beispielmessung der Fig. 4;

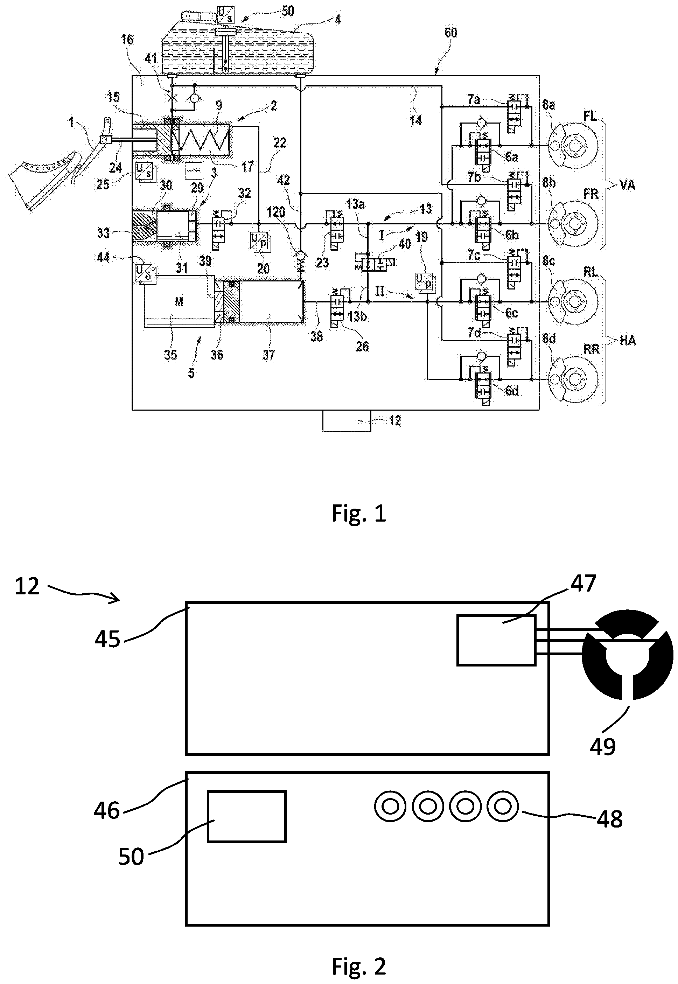

Ein in Fig. 1 dargestelltes Bremssystem für ein Kraftfahrzeug umfasst vier hydraulisch betätigbare Radbremsen 8a-8d. Die Bremsanlage umfasst einen mittels eines Betätigungs- bzw. Bremspedals 1 betätigbaren Hauptbremszylinder 2, einen mit dem Hauptbremszylinder 2 zusammenwirkenden Wegsimulator bzw. eine Simulationseinrichtung 3, einen unter Atmosphärendruck stehenden Druckmittelvorratsbehälter 4, eine elektrisch steuerbare Druckbeaufschlagungseinrichtung 5, und radindividuelle Bremsdruckmodulationsventile, welche beispielsgemäß als Einlassventile 6a-6d und Auslassventile 7a-7d ausgeführt sind. Weiterhin umfasst das Bremssystem ein elektronisches Steuer- und Regelsystem 12, welches mehrere Steuereinheiten umfasst, zur Ansteuerung der elektrisch betätigbaren Komponenten des Bremssystems.

Beispielsgemäß ist die Radbremse 8a dem linken Vorderrad (FL), die Radbremse 8b dem rechten Vorderrad (FR), die Radbremse 8c dem linken Hinterrad (RL) und die Radbremse 8d dem rechten Hinterrad (RR) zugeordnet.

Der Hauptbremszylinder 2 weist in einem Gehäuse 16 einen Hauptbremszylinderkolben 15 auf, der eine hydraulische Druckkammer 17 begrenzt, und stellt einen einkreisigen Hauptbremszylinder dar. Die Druckkammer 17 nimmt eine Rückstellfeder 9 auf, die den Kolben 15 bei unbetätigtem Hauptbremszylinder 2 in einer Ausgangslage positioniert. Die Druckkammer 17 steht einerseits über in dem Kolben 15 ausgebildete radiale Bohrungen sowie eine entsprechende Druckausgleichsleitung 41 mit dem Druckmittelvorratsbehälter 4 in Verbindung, wobei diese durch eine Relativbewegung des Kolbens 17 im Gehäuse 16 absperrbar sind. Die Druckkammer 17 steht andererseits mittels eines hydraulischen Leitungsabschnitts (auch als erste Zufuhrleitung bezeichnet) 22 mit einer Bremsversorgungsleitung 13 in Verbindung, an welche die Eingangsanschlüsse der Einlassventile 6a-6d angeschlossen sind. So ist die Druckkammer 17 des Hauptbremszylinders 2 mit allen Einlassventilen 6a-6d verbunden.

In der Druckausgleichsleitung 41 bzw. in der Verbindung zwischen der Druckkammer 17 und dem Druckmittelvorratsbehälter 4 ist in der vorliegenden Ausführungsform kein Ventil, insbesondere kein elektrisch oder hydraulisch betätigbares Ventil und kein Rückschlagventil, angeordnet.

Alternativ kann in der Druckausgleichsleitung 41 bzw. zwischen dem Hauptbremszylinder 2 und dem Druckmittelvorratsbehälter 4 ein, insbesondere stromlos offenes, Diagnoseventil, bevorzugt eine Parallelschaltung eines stromlos offenen Diagnoseventils mit einem zum Druckmittelvorratsbehälter 4 hin schließenden Rückschlagventil, enthalten sein.

Zwischen der an die Druckkammer 17 angeschlossenen Zufuhrleitung 22 und der Bremsversorgungsleitung 13 ist ein Trennventil 23 angeordnet bzw. Druckkammer 17 ist mit der Bremsversorgungsleitung 13 über die erste Zufuhrleitung 22 mit einem Trennventil 23 verbunden. Das Trennventil 23 ist als ein elektrisch betätigbares, vorzugsweise stromlos offenes, 2/2-Wegeventil ausgebildet. Durch das Trennventil 23 kann die hydraulische Verbindung zwischen der Druckkammer 17 und der Bremsversorgungsleitung 13 abgesperrt werden.

Eine Kolbenstange 24 koppelt die Schwenkbewegung des Bremspedals 1 infolge einer Pedalbetätigung mit der Translationsbewegung des Hauptbremszylinderkolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Ein an die erste Zufuhrleitung 22 angeschlossener Drucksensor 20 erfasst den in der Druckkammer 17 durch ein Verschieben des Kolbens 15 aufgebauten Druck. Dieser Druckwert kann ebenso zur Charakterisierung oder Bestimmung des Bremswunschs des Fahrzeugführers ausgewertet werden. Alternativ zu einem Drucksensor 20 kann auch ein Kraftsensor 20 zur Bestimmung des Bremswunschs des Fahrzeugführers verwendet werden.

Die Simulationseinrichtung 3 ist beispielsgemäß hydraulisch ausgeführt und hydraulisch an den Hauptbremszylinder 2 angekoppelt. Die Simulationseinrichtung 3 weist beispielsweise im Wesentlichen eine Simulatorkammer 29, eine Simulatorrückkammer 30 sowie einen die beiden Kammern 29, 30 voneinander trennenden Simulatorkolben 31 auf. Der Simulatorkolben 31 stützt sich durch ein in der (beispielsgemäß trockenen) Simulatorrückkammer 30 angeordnetes elastisches Element 33 (z. B. Simulatorfeder) an einem Gehäuse ab. Die hydraulische Simulatorkammer 29 ist beispielsgemäß mittels eines vorzugsweise elektrisch betätigbaren, vorzugsweise stromlos geschlossenen Simulatorfreigabeventils 32 mit der Druckkammer 17 des Hauptbremszylinders 2 verbunden.

Das Bremssystem bzw. die Bremsanlage umfasst je hydraulisch betätigbarer Radbremse 8a-8d ein Einlassventil 6a-6d und ein Auslassventil 7a-7d, die paarweise über Mittenanschlüsse hydraulisch zusammengeschaltet und an die Radbremse 8a-8d angeschlossen sind. Den Einlassventilen 6a-6d ist jeweils ein zu der Bremsversorgungsleitung 13 hin öffnendes, nicht näher bezeichnetes Rückschlagventil parallelgeschaltet. Die Ausgangsanschlüsse der Auslassventile 7a-7d sind über eine gemeinsame Rücklaufleitung 14 mit dem Druckmittelvorratsbehälter 4 verbunden.

Die elektrisch steuerbare Druckbereitstellungseinrichtung 5 ist als eine hydraulische Zylinder-Kolben-Anordnung (bzw. ein einkreisiger, elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist. Der Kolben 36 begrenzt den einzigen Druckraum 37 der Druckbereitstellungseinrichtung 5. Ein der Erfassung der Rotorlage des Elektromotors 35 dienender, lediglich schematisch angedeuteter Rotorlagensensor ist mit dem Bezugszeichen 44 bezeichnet. Dieser kann zur Auswertung der aktuellen Rotationsgeschwindigkeit genutzt werden.

An den Druckraum 37 der elektrisch steuerbaren Druckbeaufschlagungseinrichtung 5 ist ein Leitungsabschnitt (auch als zweite Zufuhrleitung bezeichnet) 38 angeschlossen. Die Zufuhrleitung 38 ist über ein elektrisch betätigbares, vorzugsweise stromlos geschlossenes, Zuschaltventil 26 mit der Bremsversorgungsleitung 13 verbunden. Durch das Zuschaltventil 26 kann die hydraulische Verbindung zwischen dem Druckraum 37 der elektrisch steuerbaren Druckbereitstellungseinrichtung 5 und der Bremsversorgungsleitung 13 (und damit den Eingangsanschlüssen der Einlassventile 6a-6d) gesteuert geöffnet und abgesperrt werden.

Der durch die Kraftwirkung des Kolbens 36 auf das im Druckraum 37 eingeschlossene Druckmittel erzeugte Aktuatordruck wird in die zweite Zufuhrleitung 38 eingespeist. **In** einer "Brake-by-Wire"-Betriebsart, insbesondere in einem fehlerfreien Zustand der Bremsanlage, wird die Zufuhrleitung 38 über das Zuschaltventil 26 mit der Bremsversorgungsleitung 13 verbunden. Auf diesem Weg erfolgt bei einer Normalbremsung ein Radbremsdruckauf- und -abbau für alle Radbremsen 8a-8d durch Vor- und Zurückfahren der Kolbens 36.

Bei einem Druckabbau durch Zurückfahren des Kolbens 36 strömt das vorher aus dem Druckraum 37 der Druckbereitstellungseinrichtung 5 in die Radbremsen 8a-8d verschobene Druckmittel auf dem gleichen Wege wieder in den Druckraum 37 zurück.

Alternativ können radindividuell unterschiedliche Radbremsdrücken einfach mittels der Einlass- und Auslassventile 6a-6d, 7a-7d eingestellt werden. Bei einem entsprechenden Druckabbau strömt der über die Auslassventile 7a-7d abgelassene Druckmittelanteil über die Rücklaufleitung 14 in den Druckmittelvorratsbehälter 4.

Ein Nachsaugen von Druckmittel in den Druckraum 37 ist durch ein Zurückfahren des Kolbens 36 bei geschlossenem Zuschaltventil 26 möglich, indem Druckmittel aus dem Behälter 4 über die Leitung 42 mit einem in Strömungsrichtung zum Aktuator 5 öffnenden Rückschlagventil 53 in den Akuatordruckraum bzw. Druckraum 37 strömen kann. Beispielsgemäß ist Druckraum 37 außerdem in einem unbetätigten Zustand des Kolbens 36 über ein oder mehrere Schnüffellöcher mit dem Druckmittelvorratsbehälter 4 verbunden. Diese Verbindung zwischen Druckraum 37 und Druckmittelvorratsbehälter 4 wird bei einer (ausreichenden) Betätigung des Kolbens 36 in Betätigungsrichtung 27 getrennt.

In der Bremsversorgungsleitung 13 ist ein elektrisch betätigbares, stromlos offenes Kreistrennventil 40 angeordnet, durch welches die Bremsversorgungsleitung 13 in einen ersten Leitungsabschnitt 13a, welcher (über das Trennventil 23) mit dem Hauptbremszylinder 2 verbunden ist, und einen zweiten Leitungsabschnitt 13b, welcher (über das Zuschaltventil 26) mit der Druckbereitstellungseinrichtung 5 verbunden ist, trennbar ist. Der erste Leitungsabschnitt 13a ist mit den Einlassventilen 6a, 6b der Radbremsen 8a, 8b verbunden und der zweite Leitungsabschnitt 13b ist mit den Einlassventilen 6c, 6d der Radbremsen 8c, 8d verbunden.

Bei geöffnetem Kreistrennventil 40 ist die Bremsanlage einkreisig ausgeführt. Durch Schließen des Kreistrennventils 40 kann die Bremsanlage, insbesondere situationsgerecht gesteuert, in zwei Bremskreise I und II aufgetrennt oder aufgeteilt werden. Dabei ist im ersten Bremskreis I der Hauptbremszylinder 2 (über das Trennventil 23) mit nur noch den Einlassventilen 6a, 6b der Radbremsen 8a, 8b der Vorderachse VA verbunden, und im zweiten Bremskreis II die Druckbereitstellungseinrichtung 5 (bei geöffnetem Zuschaltventil 26) mit nur noch den Radbremsen 8c und 8d der Hinterachse HA verbunden.

Die Eingangsanschlüsse aller Einlassventile 6a-6d können bei offenem Kreistrennventil 40 mittels der Bremsversorgungsleitung 13 mit einem Druck versorgt werden, der in einer ersten Betriebsart (z. B. "Brake-by-Wire"-Betriebsart) dem Bremsdruck entspricht, der von der Druckbereitstellungseinrichtung 5 bereitgestellt wird. Die Bremsversorgungsleitung 13 kann in einer zweiten Betriebsart (z. B. in einer stromlosen Rückfallbetriebsart) mit dem Druck der Druckkammer 17 des Hauptbremszylinders 2 beaufschlagt werden.

Vorteilhafterweise umfasst die Bremsanlage eine Pegelmesseinrichtung 50 zur Bestimmung eines Druckmittelpegels/-standes in dem Druckmittelvorratsbehälter 4. Vorteilhafterweise erfolgt eine Situationserkennung zur Kreistrennung mittels des Kreistrennventils 40 über die Pegelmesseinrichtung 50.

Beispielsgemäß sind die hydraulischen Komponenten, nämlich der Hauptbremszylinder 2, die Simulationseinrichtung 3, die Druckbereitstellungseinrichtung 5, die Ventile 6a-6d, 7a-7d, 23, 26, 40 und 32 sowie die hydraulischen Verbindungen inklusive der Bremsversorgungsleitung 13, zusammen in einer (einzigen) hydraulischen Steuer- und Regeleinheit 60 (HCU) angeordnet. Der hydraulischen Steuer- und Regeleinheit 60 ist das elektronische Steuer- und Regelsystem (ECU) 12 zugeordnet, welches mehrere Steuereinheiten aufweist. Bevorzugt sind hydraulische und elektronische Steuer und Regeleinheit 60, 12 als eine Einheit (HECU) ausgeführt.

Das Bremssystem umfasst einen Drucksensor 19 bzw. Systemdrucksensor zur Erfassung des von der Druckbereitstellungseinrichtung 5 bereitgestellten Druckes. Der Drucksensor 19 ist hierbei von der Druckkammer 37 der Druckbereitstellungseinrichtung 5 gesehen hinter dem Zuschaltventil 26 angeordnet.

Fig. 2 zeigt das Steuerungssystem 12 der Bremsanlage der Fig. 1. Dieses umfasst zwei getrennte Steuereinheiten 45, 46, die jeweils für die Steuerung und Regelung eines Teilbereichs der Bremsanlage ausgelegt sind. Die Motorsteuereinheit umfasst als hier Namensgebenede Steuerung die Motorsteuerung 47, welche den Motor 49 der Druckbeaufschlagungseinrichtung regelt. Die Ventilsteuereinrichtung 46 umfasst neben der namensgebenden Ventilsteuerung 48 die Elektronik zur Auslesung des Systemdrucksensors 50. Die beiden Steuereinheiten können über ei ne Schnittstelle miteinander kommunizieren. Würde eine Regelung zur Vermeidung von Druckspitzen durchgeführt, welche auf die Daten des Drucksensors 50 angwiesen ist, so müsste ein Kommunikation zwischen den beiden Steuereinheiten 46 und 47 durchgeführt werden, um einen Eingriff in die Motorsteuerung 47 durchzuführen. Eine solche Kommunikation führt zu einer Verzögerung, wodurch eine Druckspitze nicht schnell genug verhindert werden kann. Erfindungsgemäß kann das Verfahren nun einzig auf der Motorsteuereinheit 45 durchgeführt werden.

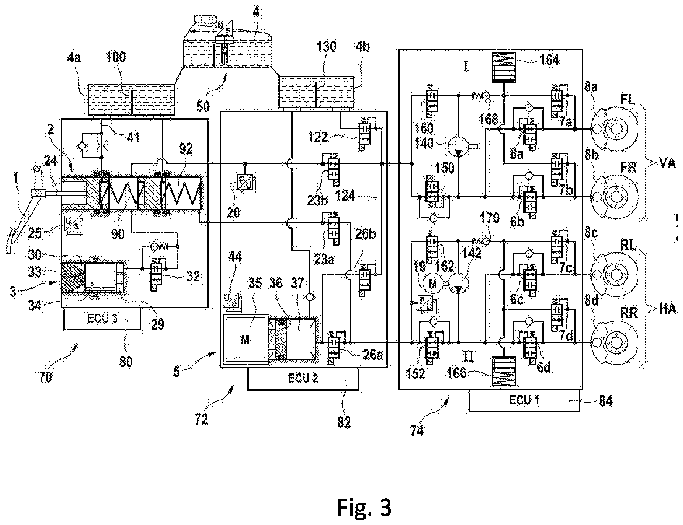

In Fig. 3 ist ein Bremssystem in einer weiteren bevorzugten Ausführungsform dargestellt. Das Bremssystem umfasst drei Module 70, 72, 74, die jeweils eine separate Steuer- und Regeleinheit 80, 82, 84 umfassen. Das Modul 70 umfasst den Hauptbremszylinder 2, der als Tandemhauptbremszylinder mit einer Primärkammer 90 und einer Sekundärkammer 92 ausgebildet ist und den Simulator bzw. die Simulationseinrichtung 3. Mit Hilfe des Simulatorfreigabeventils 32 ist im By-Wire-Modus die Primärkammer 90 mit der Simulatorkammer 29 verbindbar. Die beiden Kammern 90, 92 des Hauptbremszylinders sind hydraulisch mit einem Druckmittelvorratsbehälter 4a verbindbar. Eine Trennwand 100 in diesem Behälter stellt sicher, dass auch bei einer Leckage eines der beiden jeweils mit einer Kammer 90, 92 verbundenen Bremskreises I, II für den anderen Bremskreis noch Druckmittel zur Verfügung steht. Die Steuer- und Regeleinheit 80 des Moduls 80 dient im Wesentlichen der Steuerung des Ventils 32.

Das Bremssystem weist eine Fahrerbremswunscherfassung auf, welche einen Pedalwegsensor 25 umfasst sowie einen Drucksensor 20 zur Messung des Druckes im Hauptbremszylinder. Das zweite Modul 72 mit der Steuer- und Regeleinheit 82 umfasst die Druckbereitstellungseinrichtung 5 und zwei Zuschaltventile 26a, 26b, durch die der Druckraum 37 der Druckbereitstellungseinrichtung 5 hydraulisch mit den Radbremsen verbindbar ist.

Sie umfasst weiterhin den einen Rotorlagensensor 44 sowie einen Drucksensor 20 zur Messung des Druckes in der Primärkammer 90. Die beiden Kammern 90, 92 können im Brake-by-Wire-Modus mit Hilfe von Trennventilen 23a, 23b von den Radbremsen hydraulisch getrennt werden, sodass der Fahrer bei geöffnetem Simulatorfreigabeventil 22 Bremsflüssigkeit aus der Primärkammer 90 in die Simulatorkammer 29 verschiebt.

Die Druckkammer 37 ist hydraulisch mit einem Druckmittelvorratsbehälter 4b verbunden und kann aus diesem Bremsmittel nachsaugen, wobei durch ein Rückschlagventil 120 der Rückfluss von Druckmittel aus Druckkammer 37 in den Behälter 4b verhindert wird.

Wenn die Trennventile 23a, 23b geschlossen sind und den Hauptbremszylinder 2 hydraulisch während des By-Wire-Betriebes von den Radbremsen 8a-d abtrennen, kann über eine Leitung 124 und Öffnen eines Ablassventils 122 überschüssiges Bremsvolumen in den Behälter 4b gefördert werden.

Im Druckmittelvorratsbehälter 4b ist eine Zwischenwand 130 vorgesehen, welche zwei getrennte Kammern definiert, wenn der Füllstand unter die Höhe der Zwischenwand 130 sinkt. Die Steuer- und Regeleinheit 82 dient zur Ansteuerung der Druckbereitstellungseinrichtung 5 und der Ventile 26a, 26b, 23a, 23b, 122.

Das dritte Modul 74 mit der Steuer- und Regeleinheit 84 umfasst die den Radbremsen zugeordneten Einlassventile 6a-d und Auslassventile 7a-d. In jedem Bremskreis ist jeweils eine Pumpe 140, 142 vorgesehen, die jeweils über ein Pumpenzuschaltventil 160, 162 hydraulisch im Saugpfad mit der Druckbereitstellungseinrichtung verbunden werden kann.

Mit Hilfe von Überstromventilen 150, 153 kann jeweils der Druck eingestellt werden, welcher mit Hilfe der jeweiligen Pumpe 140, 142 aufgebaut werden kann. Fördert die Pumpe 140, 142 zu viel Volumen und der Druck steigt, wird dieses Ventil 150, 152 aufgedrückt und der Druck im Pumpenraum bleibt durch dieses Ventil 150, 152 und dessen Strom regelbar.

Weiterhin ist in jedem der beiden Bremskreise jeweils ein Niederdruckspeicher 164, 166 vorgesehen. Mit Hilfe eines Rückschlagventils 168, 170 wird jeweils Fluss von Druckmittel aus dem Förderkreis der Pumpe 140, 142 in Richtung der Auslassventile 7a-d verhindert. Die Steuer- und Regeleinheit 84 dient der Ansteuerung der Pumpen 140, 142 sowie der Ventile 67a-d, 7a-d 160, 162, 150, 152. Das Modul 74 umfasst weiterhin den Systemdrucksensor 19.

Die beiden Druckmittelvorratsbehälter 4a, 4b sind mit dem gemeinsamen Druckmittelvorratsbehälter 4 hydraulisch verbunden.

Die Druckbereitstellungseinrichtung 5 dient in diesem Bremssystem zur Bereitstellung eines Vordruckes, während die Pumpen 140, 142 insbesondere zu Regelvorgängen benutzt werden und den Druckaufbau durch die Druckbereitstellungseinrichtung 5 unterstützen.

Die drei Steuer- und Regeleinheiten 80, 82, 84 sind signalseitig miteinander verbunden, insbesondere über einen CAN-Bus.

Das erfindungsgemäße Verfahren kann nun vorteilhaft auf der zweiten Steuereinheit 82 implementiert sein. Diese regelt den Linearaktuator 5 und umfasst somit insbesondere die Daten des Rotorlagensensors 44. Stellt die ECU 2 82 einen Sprung im Quotienten aus Drehmoment und Umdrehungsgeschwindigkeit fest, so kann diese insbesondere das Ablassventil 122 öffnen, welches auf der gleichen Platine gesteuert wird. Somit wird sehr schnell auf das Auftreten einer Druckspitze reagiert.

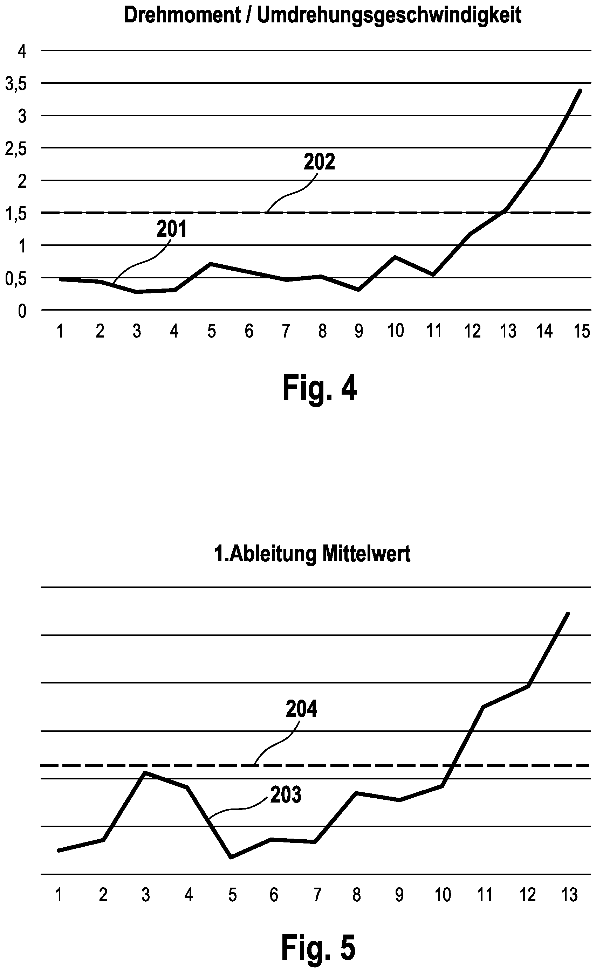

In Fig. 4 ist beispielhaft der Quotient aus einem gemessenen Drehmoment und der Umdrehungsgeschwindigkeit eines Linearaktuators dargestellt. Im normalen Betrieb (vordere Bereich der Messung) schwankt der Wert des Quotienten um etwa 0,5 mNm/rpm. Sobald die Einlassventile schlagartig geschlossen werden, steigt auch der Wert des Quotienten steil an und überschreitet den ersten Schwellwert bei 1,5mNm/rpm. Das System geht nun von einer Druckspitze aus und leitet entsprechende Gegenmaßnahmen ein.

In Fig 5 ist die Auswertung der Steigung 203 des Quotienten dargestellt. Die Daten werden durch Ableitung des Quotienten der Fig. 4 berechnet und zeitlich gemittelt. Im Normalbetrieb schwanken die Werte unterhalb des zweiten Schwellwerts 204. Sobald die Einlassventile geschlossen werden steigt die Steigung rapide an und überschreitet den zweiten Schwellwert 204 und es werden entsprechende Gegenmaßnahmen eingeleitet.

Das erfindungsgemäße Verfahren sorgt damit auch bei redundanten Bremsanlagen, welche eine Aufteilung der Steuerung auf mehrere Steuereinheiten aufweist, für eine zuverlässige Vermeidung von Druckspitzen und kann somit die Lebensdauer der hydraulischen Bauteile verlängern.

### Bezugszeichenliste:

1 Bremspedal
2 Hauptbremszylinder
3 Simulationseinrichtung
4 Druckmittelvorratsbehälter
5 Druckbeaufschlagungseinrichtung
6 a bis d Einlassventile
7 a bis d Auslassventile
8 a bis d Radbremse
9 Rückstellfeder
12 Steuersystem
13 Bremsversorgungsleitung
14 Rücklaufleitung
16 Gehäuse
17 Druckkammer
19 Systemdrucksensor
20 Hauptzylinderdrucksensor
22 erste Zufuhrleitung
23 Trennventil
24 Kolbenstange
25 Wegsensor
26 Zuschaltventil
29 Simulatorkammer
30 Simulatorrückkammer
31 Simulatorkolben
32 Simulatorfreigabeventils
33 Elastisches Element
35 Kolben
36 Elektromotor
37 Druckraum
38 Zufuhrleitung
39 Rotations-Translationsgetriebe
40 Kreistrennventil
41 Druckausgleichsleitung
42 Leitung
44 Rotorlagensensor
45 Motorsteuereinheit
46 Ventilsteuereinheit
47 Motorsteuerung
48 Ventilsteuerung
49 Motor
50 Systemdrucksensormodul
70 erstes Modul
72 zweites Modul
74 drittes Modul
80 erste Steuereinheit
82 zweite Steuereinheit
84 dritte Steuereinheit
90 Primärkammer
92 Sekundärkammer
120 Rückschlagventil
122 Ablassventil
124 Leitung
130 Zwischenwand
140 erste Pumpe
142 Zweite Pumpe
150 erstes Überströmventil
152 zweites Überströmventil
160 erstes Pumpenzuschaltventil
162 zweites Pumpenzuschaltventil
164 erster Niederdruckspeicher
166 zweiter Niederdruckspeicher
168 erstes Rückschlagventil
170 zweites Rückschlagventil
201 Quotient Drehmoment/Umdrehungsgeschwindigkeit
202 erster Schwellwert
203 Ableitung des Quotienten
204 zweiter Schwellwert

## Patentansprüche

1. Verfahren zur Reduzierung von Druckspitzen in hydraulischen Bremsanlagen aufweisend eine elektrisch betriebene Druckbeaufschlagungseinrichtung (5), wobei eine Antriebswiderstandsgröße, insbesondere das Drehmoment, der Druckbeaufschlagungseinrichtung (5) gemessen wird, und **dadurch gekennzeichnet, dass** eine Geschwindigkeitsgröße der Druckbeaufschlagungseinrichtung (5) gemessen wird, und ein Quotient (201) der Antriebswiderstandsgröße und der Geschwindigkeitsgröße berechnet wird, wobei der so bestimmte Quotient (201) auf das Auftreten eines Sprungs überwacht wird und im Falle eines festgestellten Sprungs eine Geschwindigkeitsanforderung der Druckbeaufschlagungseinrichtung (5) reduziert wird und/oder ein hydraulisches Ventil (6, 122) zum Druckabbau angesteuert wird.

2. Verfahren nach Anspruch 1 **dadurch gekennzeichnet, dass** die Druckbeaufschlagungseinrichtung (5) als Linearaktuator ausgebildet ist.

3. Verfahren nach einem der vorhergehenden Ansprüche **dadurch gekennzeichnet, dass** ein Sprung erkannt wird, wenn der Absolutwert des berechneten Quotienten (201) einen ersten Schwellwert (202) übersteigt.

4. Verfahren nach Anspruch 3 **dadurch gekennzeichnet, dass** der erste Schwellwert (202) zwischen 1 mNm/rpm und 2 mNm/rpm liegt.

5. Verfahren nach einem der vorhergehenden Ansprüche **dadurch gekennzeichnet, dass** ein zeitlicher Verlauf des Quotienten (201) gespeichert wird, wobei ein Sprung erkannt wird, wenn die Steigung (203) des berechneten Quotienten (201) in dem gespeicherten Verlauf einen zweiten Schwellwert (204) übersteigt.

6. Verfahren nach Anspruch 5 **dadurch gekennzeichnet, dass** der zweite Schwellwert (204) zwischen 0,1 Nm/rpm*sek und 0,3 Nm/rpm*sek liegt.

7. Verfahren nach einem der vorhergehenden Ansprüche **dadurch gekennzeichnet, dass** ein zeitlicher Verlauf des Quotienten (201) gespeichert wird, wobei ein Sprung erkannt wird, wenn die Krümmung des berechneten Quotienten (201) in dem gespeicherten Verlauf einen dritten Schwellwert übersteigt.

8. Verfahren nach einem der vorhergehenden Ansprüche **dadurch gekennzeichnet, dass** das hydraulische Ventil (122) derart angesteuert wird, dass dieses zumindest teilweise öffnet.

9. Verfahren nach einem der vorhergehenden Ansprüche **dadurch gekennzeichnet, dass** die Ansteuerung des hydraulischen Ventils (122) von der gleichen Steuereinheit durchgeführt wird, welche auch die Druckbeaufschlagungseinrichtung regelt.

10. Verfahren nach einem der vorhergehenden Ansprüche **dadurch gekennzeichnet, dass** das hydraulische Ventil (122) zwischen der Druckbeaufschlagungseinrichtung (5) und einem druckfreien Bremsflüssigkeitsreservoir (4) angeordnet ist.

11. Verfahren nach einem der vorhergehenden Ansprüche **dadurch gekennzeichnet, dass** das hydraulische Ventil zumindest ein Eingangsventil (6) einer Radbremse (8) der Bremsanlage umfasst, wobei ein Steuerstrom des Eingangsventils (6) reduziert wird.

12. Bremsanlage für ein Kraftfahrzeug, **dadurch gekennzeichnet, dass** diese dazu eingerichtet ist ein Verfahren nach einem der Ansprüche 1 bis 11 durchzuführen.

## Claims

1. Method for reducing pressure peaks in hydraulic brake systems having an electrically operated pressurization device (5),
wherein a drive-resistance variable, in particular the torque, of the pressurization device (5) is measured, and **characterized in that** a speed variable of the pressurization device (5) is measured and a quotient (201) of the drive-resistance variable and the speed variable is calculated, wherein the quotient (201) determined in this way is monitored for the occurrence of a jump and, in the case of a determined jump, a speed requirement of the pressurization device (5) is reduced and/or a hydraulic valve (6, 122) for pressure reduction is actuated.

2. Method according to Claim 1, **characterized in that** the pressurization device (5) is in the form of a linear actuator.

3. Method according to either of the preceding claims, **characterized in that** a jump is identified if the absolute value of the calculated quotient (201) exceeds a first threshold value (202).

4. Method according to Claim 3, **characterized in that** the first threshold value (202) lies between 1 mNm/rpm and 2 mNm/rpm.

5. Method according to one of the preceding claims, **characterized in that** a temporal profile of the quotient (201) is stored, wherein a jump is identified if the gradient (203) of the calculated quotient (201) in the stored profile exceeds a second threshold value (204).

6. Method according to Claim 5, **characterized in that** the second threshold value (204) lies between 0.1 Nm/rpm*sec and 0.3 Nm/rpm*sec.

7. Method according to one of the preceding claims, **characterized in that** a temporal profile of the quotient (201) is stored, wherein a jump is identified if the curvature of the calculated quotient (201) in the stored profile exceeds a third threshold value.

8. Method according to one of the preceding claims, **characterized in that** the hydraulic valve (122) is actuated in such a way as to open at least partially.

9. Method according to one of the preceding claims, **characterized in that** the actuation of the hydraulic valve (122) is carried out by the same control unit that also regulates the pressurization device.

10. Method according to one of the preceding claims, **characterized in that** the hydraulic valve (122) is arranged between the pressurization device (5) and an unpressurized brake-fluid reservoir (4).

11. Method according to one of the preceding claims, **characterized in that** the hydraulic valve comprises at least one inlet valve (6) of a wheel brake (8) of the brake system, wherein a control current of the inlet valve (6) is reduced.

12. Brake system for a motor vehicle, **characterized in that** said brake system is configured to carry out a method according to one of Claims 1 to 11.

## Revendications

1. Procédé permettant de réduire des pics de pression dans des systèmes de freinage hydrauliques présentant un dispositif de mise en pression (5) à commande électrique,
dans lequel une grandeur de résistance à l'entraînement, en particulier le couple, du dispositif de mise en pression (5) est mesurée, et **caractérisé en ce qu'**une grandeur de vitesse du dispositif de mise en pression (5) est mesurée, et le quotient (201) de la grandeur de résistance à l'entraînement et de la grandeur de vitesse est calculé, dans lequel le quotient (201) ainsi déterminé est surveillé quant à l'apparition d'un saut, et en cas de saut constaté, une demande de vitesse du dispositif de mise en pression (5) est réduite et/ou une soupape hydraulique (6, 122) est pilotée pour réduire la pression.

2. Procédé selon la revendication 1, **caractérisé en ce que** le dispositif de mise en pression (5) est réalisé sous la forme d'un actionneur linéaire.

3. Procédé selon l'une quelconque des revendications précédentes, **caractérisé en ce qu'**un saut est identifié si la valeur absolue du quotient (201) calculé dépasse une première valeur seuil (202).

4. Procédé selon la revendication 3, **caractérisé en ce que** la première valeur seuil (202) est située entre 1 mNm/rpm et 2 mNm/rpm.

5. Procédé selon l'une quelconque des revendications précédentes, **caractérisé en ce qu'**une courbe dans le temps du quotient (201) est mémorisée, dans lequel le saut est identifié si la pente (203) du quotient (201) calculé dans la courbe dans le temps dépasse une deuxième valeur seuil (204).

6. Procédé selon la revendication 5, **caractérisé en ce que** la deuxième valeur seuil (204) est située entre 0,1 Nm/rpm*sec et 0,3 Nm/rpm*sec.

7. Procédé selon l'une quelconque des revendications précédentes, **caractérisé en ce qu'**une courbe dans le temps du quotient (201) est mémorisée, dans lequel un saut est identifié si la courbure du quotient (201) calculé dans la courbe dans le temps mémorisée dépasse une troisième valeur seuil.

8. Procédé selon l'une quelconque des revendications précédentes, **caractérisé en ce que** la soupape hydraulique (122) est pilotée de façon à être au moins partiellement ouverte.

9. Procédé selon l'une quelconque des revendications précédentes, **caractérisé en ce que** le pilotage de la soupape hydraulique (122) est effectué par la même unité de commande qui régule aussi le dispositif de mise en pression.

10. Procédé selon l'une quelconque des revendications précédentes, **caractérisé en ce que** la soupape hydraulique (122) est disposée entre le dispositif de mise en pression (5) et un réservoir de liquide de frein (4) sans pression.

11. Procédé selon l'une quelconque des revendications précédentes, **caractérisé en ce que** la soupape hydraulique comprend au moins une soupape d'entrée (6) d'un frein de roue (8) du système de freinage, dans lequel un courant de commande de la soupape d'entrée (6) est réduit.

12. Système de freinage pour un véhicule automobile, **caractérisé en ce qu'**il est conçu pour exécuter un procédé selon l'une des revendications 1 à 11.
